# EUROPEAN PATENT APPLICATION

(11) **EP 4 454 842 A1**
(43) Date of publication of application: **30.10.2024**
(21) Application number: 24170016.0
(22) Date of filing: 12.04.2024
(51) Int. Cl.: B26F 1/02, B26F 1/14, C04B 35/80, B26F 1/24, B26D 1/00

(54) **Z-CHANNEL CREATION IN WOVEN PREFORM BY INCORPORATION OF PIN FEATURES INTO PREFORM TOOLING**

(30) Priority: 14.04.2023 US 202318134941
(71) Applicant: RTX Corporation, Farmington, CT 06032 (US)
(72) Inventor: FERNANDEZ, Robin H., East Hartford, 06118 (US)
(74) Representative: Dehns

(57) **Abstract**

A tooling assembly (10) for debulking a fibrous preform (12) includes a first tooling fixture (16) comprising a plurality of receiving holes (24), and a second tooling fixture (14) comprising a plurality of pins (18) projecting toward the first tooling fixture (16), each of the plurality of pins (18) corresponding to and extending towards one of the plurality of receiving holes (24). The second tooling fixture (14) is engageable with the first tooling fixture (16) to define an inner volume therebetween, the inner volume configured to support the preform (12) during debulking while a compressive force is applied thereto.

## Description

### BACKGROUND

The present invention relates to the fabrication of ceramic matrix composites (CMCs) and, more particularly, to CMCs having improved properties for operating in gas turbine engines.

In the processing of CMCs, there is a need to infiltrate matrix within and around fibrous tows to replace pore volume with dense matrix material. In a woven system, large voids often exist between adjacent tows of a preform. Such voids can become large defects after infiltration of the composite that are detrimental to composite properties. The pore network through a woven system is often highly tortuous for infiltrating reactant vapors, which leads to uneven deposition through the thickness of the preform. The formation of z-channels can create more direct pathways for reactant gases, which can facilitate more even matrix infiltration. Thus, means for creating z-channels in preforms are desirable.

### SUMMARY

A tooling assembly for debulking a fibrous preform includes a first tooling fixture comprising a plurality of receiving holes, and a second tooling fixture comprising a plurality of pins projecting toward the first tooling fixture, each of the plurality of pins corresponding to and extending towards one of the plurality of receiving holes. The second tooling fixture is engageable with the first tooling fixture to define an inner volume therebetween, the inner volume configured to support the preform during debulking while a compressive force is applied thereto.

A method of preparing a fibrous preform for use in a ceramic matrix composite includes debulking the fibrous preform by supporting the preform with a first tooling fixture, the first tooling fixture including a plurality of receiving holes, engaging a second tooling fixture with the first tooling fixture such that the preform is disposed therebetween, and applying a compressive force to the preform. Engaging the second tooling fixture with the first tooling fixture causes a plurality of pins projecting from the first tooling fixture to extend through a thickness of the preform.

Features of embodiments are set forth in the dependent claims.

### BRIEF DESCRIPTION OF THE DRAWINGS

FIG. 1 is a simplified cross-sectional illustration of a first embodiment of a preform tooling assembly with pins.
FIG. 2 is a simplified cross-sectional illustration of the preform tooling assembly of FIG. 1 in an assembled state such that the pins are inserted through the preform.
FIGS. 3A, 3B, and 3C are simplified side views of portions of alternative male tooling fixtures for the tooling assemblies of FIGS. 1 and 2.
FIG. 4 is a simplified cross-sectional illustration of a second embodiment of a preform tooling assembly with pins.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

This disclosure presents means for perforating a fibrous ceramic preform prior to densification (e.g., via chemical vapor infiltration - CVI). More specifically, perforation can be performed during a debulking process. Multiple embodiments of combined perforating/debulking tooling can be used to create z-channels through the thickness of the preform, such that separate tooling is advantageously not required. Z-channels facilitate access to the interior of the preform by reactant vapors such that matrix deposits in a more even manner compared to non-perforated preforms.

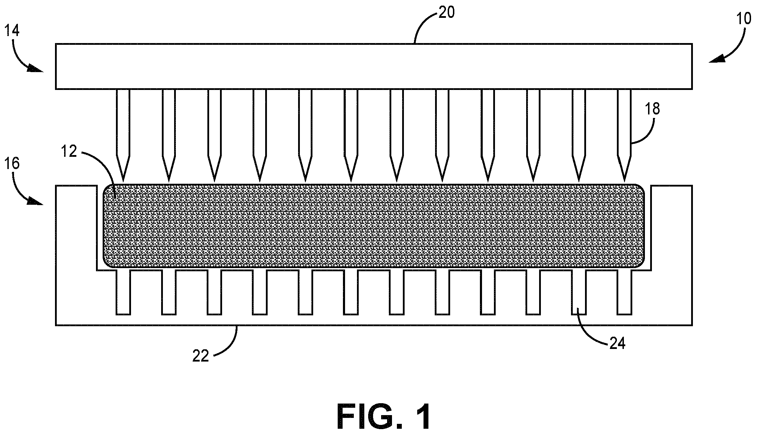

FIG. 1 is a simplified cross-sectional illustration of tooling assembly 10 supporting preform 12. Tooling assembly 10 is more specifically a debulking tooling assembly used to shape/mold preform 12 while preform 12 is compressed by one or a combination of mechanical or vacuum pressure. Debulking helps reduce voids and remove gases within preform 12 and can be performed incrementally as layers are added to preform 12, and/or in a dedicated debulking step prior to matrix formation. Preform 12 can be formed from one or more layers of a ceramic (e.g., silicon carbide - SiC) fabric in a woven architecture such as plain, harness (e.g., 3, 5, 8, etc.), twill, braid, tape layup, or non-symmetric to name a few non-limiting examples. Non-woven architectures (e.g., chopped, felted, etc.) are also contemplated herein. The fabric can be dry, stabilized, or a pre-preg material.

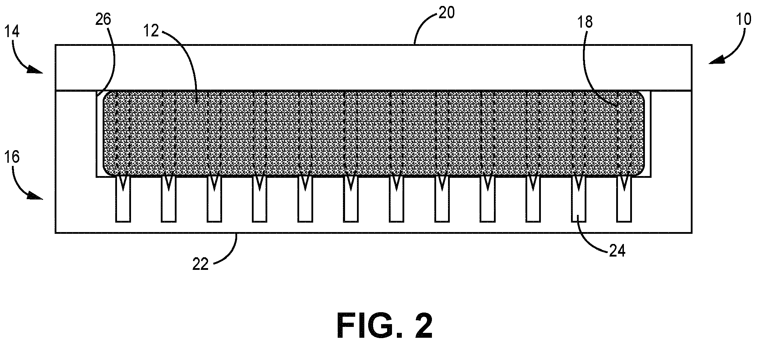

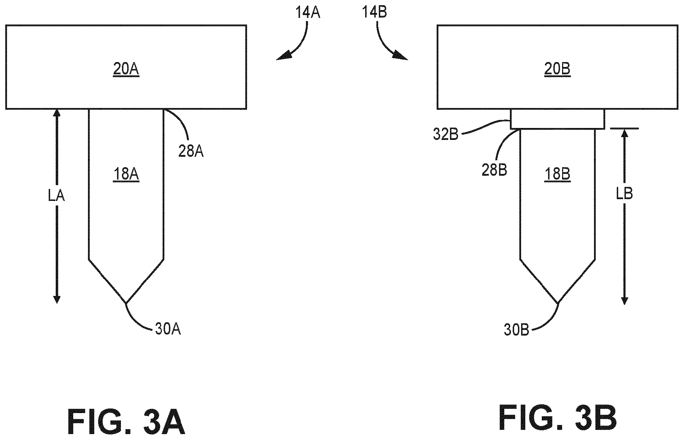

As shown, tooling assembly 10 includes male (i.e., perforating) tooling fixture 14 and female (i.e., receiving) tooling fixture 16. Male tooling fixture 14 includes multiple pins 18 extending away from backplate 20. Pins 18 can be arranged as an array of rows and columns and can have uniform or varied lengths with respect to other pins 18, as is discussed below with respect to FIGS. 3A-3C. Pins 18 can be monolithically formed with, or removably attached to backplate 20 depending on the embodiment, as is discussed in greater detail below. Female tooling fixture 16 includes baseplate 22 with receiving holes 24 corresponding to respective pins 18 on male tooling fixture 14. Holes 24 can be sized to receive respective pins 18 when pins 18 are inserted through preform 12, as is shown in FIG. 2. Tooling fixtures 14 and 16 can be formed from a metallic material, a hardened polymer (e.g., plastic), or ceramic, to name a few non-limiting examples.

FIG. 2 is a simplified cross-sectional illustration of tooling assembly 10 in an assembled/engaged state around preform 12. In the assembled state, fixtures 14 and 16 are configured to at least partially enclose preform 12 within fixed inner volume 26. Although not shown in FIG. 2, fixtures 14 and 16 can be held together via clamps or other suitable means of securing one to the other. Pins 18 are inserted completely through the thickness of preform 12 such that the tips/ends extend partially into respective holes 24. When male tooling fixture 14 and pins 18 are removed from preform 12, z-channels will have been formed at the locations of each pin 18.

In one example, a non-debulked or partially debulked preform 12 can be placed within tooling assembly 10, and a mechanical compressive force exerted on preform 12 as fixtures 14 and 16 are secured together. This can at least nominally reduce the thickness of preform 12. In another example, a vacuum can be generated within inner volume 26 to compress and debulk preform 12. In yet another example, a combination of mechanical and vacuum pressure can be used to debulk preform 12. In any case, z-channels are formed during debulking by pins 18. Pins 18 are inserted in such manner as to maximize the pushing away of individual fibers of perform 12, and to minimize the breaking of such fibers. Accordingly, formation of z-channels with pins 18 during debulking can be less destructive than methods such as laser drilling, as well as needling processes that occur in dedicated steps, requiring additional handling of preform 12.

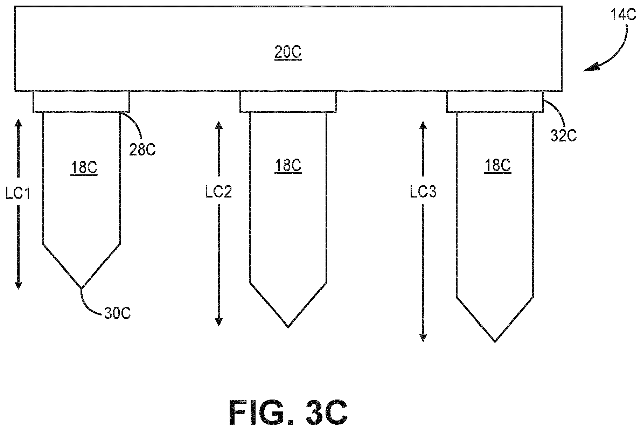

FIG. 3A, 3B, and 3C are simplified side views of alternative male tooling fixtures 14A, 14B, and 14C respectively. More specifically, FIG. 3A shows an individual pin 18A extending from backplate 20A. Pin 18A has a length LA extending from base 28A to oppositely disposed tip 30A. Pin 18A is configured with a generally uniformly cylindrical portion over a majority of length LA and a relatively short taper near tip 30A such that tip 30A is pointed. In the embodiment shown, tooling fixture 14A can be monolithically formed (e.g., additively manufactured, 3D printed, etc.) such that pins 18A and backplate 20A are formed from the same material (e.g., metal, polymer, etc.). Length LA can be uniform across all pins 18A in an exemplary embodiment.

FIG. 3B shows individual pin 18B extending from mounting boss 32B on backplate 20B. As such, pin 18B can be removably attached to backplate 20B via threaded or other engagement with mounting boss 32B. Base 28B can be defined as the portion of pin 18B immediately extending away from mounting boss 32B, although some of pin 18B can extend into mounting boss 32B. Pin 18B has an exposed length LB extending from base 28B to oppositely disposed tip 30B. LB can, in some embodiments, be less than LA due to the inclusion of mounting boss 32B, while in other embodiments, pin 18B can be elongated such that LB is generally equal to LA. Length LB can be uniform across all pins 18B in an exemplary embodiment. Like pin 18A, pin 18B can be mostly cylindrical with a short taper to form a point at tip 30B. Pin 18B can be formed from the same material as backplate 20B, or from a different material. For example, both can be formed from a hardened polymer material, or pin 18B can be formed from a hardened polymer or ceramic, while backplate 20B can be formed from metal. Removable pins 18B are individually replaceable in case of damage to certain pins 18B after repeated insertion into ceramic preform. Select pins 18B can also be removed to vary the pattern of pins 18B, for example by decreasing the total number of pins 18B to increase pin-to-pin spacing. In this manner, male tooling fixture 14B can be customizable on a per-preform basis.

FIG. 3C shows multiple individual pins 18C of varied lengths, LC1, LC2, and LC3. More specifically, pins 18C are removably attached to backplate 20C via mounting bosses 32C, and the exposed length between base 28C and tip 30C of each pin 18C varies such that LC3 is greater than LC2, and LC2 is greater than LC1. Male tooling fixture 14C can be preferable where the thickness of preform 12 increases and/or decreases across a given preform area.

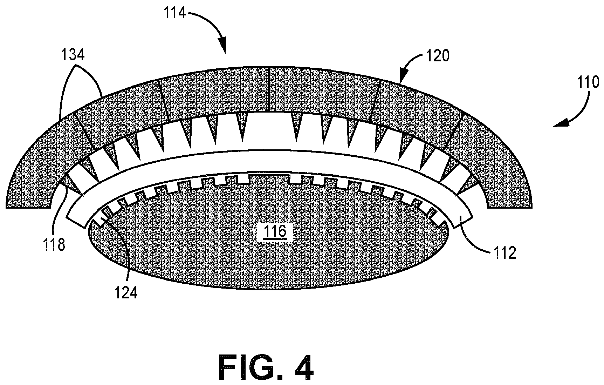

FIG. 4 is a simplified cross-sectional view of alternative tooling assembly 110 for use with non-linear/non-planar preforms 112. Preform 112 can be substantially similar to preform 12, except that preform 112 is curved. In one embodiment, preform 112 can be used to form an airfoil (e.g., for a blade or vane) of a gas turbine engine. Like tooling assembly 10, tooling assembly 110 can be a debulking tooling assembly including male tooling fixture 114 and female tooling fixture 116, each having curvature corresponding to preform 112. Male tooling fixture 114 includes pins 118 extending from backplate 120. To facilitate insertion and removal of pins 118 into/from preform 112, male tooling fixture 114 includes multiple smaller backplate sections 134, each with a subset of pins 118. As such, each section can be put into place and secured to adjacent sections for debulking, then individually removed. This permits pins 118 to be oriented generally normal to the surface of preform 112. Female tooling fixture 116 can include holes 124 corresponding to and configured to receive the tips of pins 118. In the embodiment shown, female tooling fixture can be a mandrel.

Tooling assembly 110 operates substantially similarly to tooling assembly 10, applying a mechanical compressive force, and/or supporting preform 112 while a vacuum is applied. Tooling assembly 110 can be all or partially formed from metal, hardened polymer material, or ceramic. Like pins 18A and 18B, pins 118 can be monolithically formed with backplate 120 or removably attached thereto (e.g., via mounting bosses). Pins 118 can be the same material as backplate 120, or a different material. Pins 118 can further be mostly cylindrical with a short taper to form a pointed tip.

After debulking, preforms 12, 112 can be removed from respective tooling assemblies 10, 110 to undergo further processing. In some embodiment, preforms 12, 112 can be transferred to graphite tooling assemblies for interface coating (IFC) deposition via CVI and/or densification (i.e., matrix formation) via CVI. Densification is carried out until the resulting CMC has reached the desired residual porosity. In an alternative embodiment, densification can include other methodologies such as, but not limited to, melt infiltration and polymer infiltration and pyrolysis (PIP).

A CMC component formed with the disclosed tooling assemblies can be incorporated into aerospace, maritime, or industrial equipment, to name a few, non-limiting examples.

### Discussion of Possible Embodiments

The following are non-exclusive descriptions of possible embodiments of the present invention.

A tooling assembly for debulking a fibrous preform includes a first tooling fixture comprising a plurality of receiving holes, and a second tooling fixture comprising a plurality of pins projecting toward the first tooling fixture, each of the plurality of pins corresponding to and extending towards one of the plurality of receiving holes. The second tooling fixture is engageable with the first tooling fixture to define an inner volume therebetween, the inner volume configured to support the preform during debulking while a compressive force is applied thereto.

The tooling assembly of the preceding paragraph can optionally include, additionally and/or alternatively, any one or more of the following features, configurations and/or additional components:
In the above tooling assembly, the second tooling fixture can be further engageable with the first tooling fixture such that the plurality of pins extend through the thickness of the preform and at least partially into respective ones of the plurality of receiving holes.

In any of the above tooling assemblies, a length of each of the plurality of pins can be uniform across the second tooling fixture.

In any of the above tooling assemblies, one pin of the plurality of pins can have a first length, and a second pin of the plurality of pins can have a second length greater than the first length.

In any of the above tooling assemblies, the second tooling fixture can further include a backplate.

In any of the above tooling assemblies, each of the plurality of pins can be removably attached to the backplate via a mounting boss.

In any of the above tooling assemblies, the plurality of pins can be monolithically formed with the backplate.

In any of the above tooling assemblies, the backplate can be formed from a first material, and the plurality of pins can be formed from a second material, the second material being different than the first material.

In any of the above tooling assemblies, each of the backplate and the plurality of pins can be formed from the same material.

In any of the above tooling assemblies, the first tooling fixture and the backplate of the second tooling fixture can be curved.

In any of the above tooling assemblies, the backplate can include a plurality of sections, each of the plurality of sections including a subset of the plurality of pins.

In any of the above tooling assemblies, the first tooling fixture can be a mandrel.

In any of the above tooling assemblies, each of the plurality of pins can be cylindrical with a pointed tip.

A method of preparing a fibrous preform for use in a ceramic matrix composite includes debulking the fibrous preform by supporting the preform with a first tooling fixture, the first tooling fixture including a plurality of receiving holes, engaging a second tooling fixture with the first tooling fixture such that the preform is disposed therebetween, and applying a compressive force to the preform. Engaging the second tooling fixture with the first tooling fixture causes a plurality of pins projecting from the first tooling fixture to extend through a thickness of the preform.

The method of the preceding paragraph can optionally include, additionally and/or alternatively, any one or more of the following features, configurations and/or additional components:
In the above method, engaging the second tooling fixture with the first tooling fixture can further cause the plurality of pins to extend at least partially into respective ones of the plurality of receiving holes.

In any of the above methods, the compressive force can include one or a combination of mechanical pressure and vacuum pressure.

In any of the above methods, debulking can further include after applying the compressive force to the preform, removing the second tooling fixture such that a plurality of z-channels is formed through the thickness of the preform.

Any of the above methods can further include densifying the preform using one or a combination of chemical vapor infiltration, chemical vapor deposition, polymer infiltration and pyrolysis, and melt infiltration.

In any of the above methods, the preform can be formed from silicon carbide.

In any of the above methods, the first tooling fixture, the second tooling fixture, and the preform can be curved.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A tooling assembly (10; 110) for debulking a fibrous preform (12; 112), the tooling assembly comprising:
a first tooling fixture (16; 116) comprising a plurality of receiving holes (24; 124); and
a second tooling fixture (14; 14A; 14B; 14C; 114) comprising a plurality of pins (18; 18A; 18B; 18C; 118) projecting toward the first tooling fixture (16; 116), each of the plurality of pins (18; 18A; 18B; 18C; 118) corresponding to and extending towards one of the plurality of receiving holes (24; 124),
wherein the second tooling fixture (14; 14A; 14B; 14C; 114) is engageable with the first tooling fixture (16; 116) to define an inner volume (26) therebetween, the inner volume (26) configured to support the preform (12; 112) during debulking while a compressive force is applied thereto.

2. The tooling assembly of claim 1, wherein the second tooling fixture (14; 14A; 14B; 14C; 114) is further engageable with the first tooling fixture (16; 116) such that the plurality of pins (18; 18A; 18B; 18C; 118) extend through the thickness of the preform (12; 112) and at least partially into respective ones of the plurality of receiving holes (24; 124).

3. The tooling assembly of claim 1 or 2, wherein a length (LA; LB) of each of the plurality of pins (18; 18A; 18B; 118) is uniform across the second tooling fixture (14; 14A; 14B; 114).

4. The tooling assembly of claim 1 or 2, wherein one pin (18C) of the plurality of pins (18C) has a first length (LC1; LC2), and wherein a second pin (18C) of the plurality of pins (18C) has a second length (LC2; LC3) greater than the first length (LC1; LC2).

5. The tooling assembly of any preceding claim, wherein the second tooling fixture (14; 14A; 14B; 14C; 114) further comprises a backplate (20; 20A; 20B; 20C; 120).

6. The tooling assembly of claim 5, wherein each of the plurality of pins (18B; 18C) is removably attached to the backplate (20B; 20C) via a mounting boss (32B; 32C), or wherein the plurality of pins (18A) are monolithically formed with the backplate (20A).

7. The tooling assembly of claim 5 or 6, wherein the backplate (20; 20A; 20B; 20C; 120) is formed from a first material, and wherein the plurality of pins (18; 18A; 18B; 18C; 118) are formed from a second material, the second material being different than the first material, or wherein each of the backplate (20; 20A; 20B; 20C; 120) and the plurality of pins (18; 18A; 18B; 18C; 118) are formed from the same material.

8. The tooling assembly of claim 5, 6 or 7, wherein the first tooling fixture (116) and the backplate (120) of the second tooling fixture (114) are curved.

9. The tooling assembly of any of claim 8, wherein the backplate (120) comprises a plurality of sections (134), each of the plurality of sections (134) comprising a subset of the plurality of pins (118).

10. The tooling assembly of claim 8 or 9, wherein the first tooling fixture (116) is a mandrel.

11. The tooling assembly of any preceding claim, wherein each of the plurality of pins (18; 18A; 18B; 18C) is cylindrical with a pointed tip (30A; 30B; 30C).

12. A method of preparing a fibrous preform (12; 112) for use in a ceramic matrix composite, the method comprising:
debulking the fibrous preform (12; 112) by:
supporting the preform (12; 112) with a first tooling fixture (16; 116), the first tooling fixture (16; 116) comprising a plurality of receiving holes (24; 124);
engaging a second tooling fixture (14; 14A; 14B; 14C; 114) with the first tooling fixture (16; 116) such that the preform (12; 112) is disposed therebetween; and
applying a compressive force to the preform (12; 112),
wherein engaging the second tooling fixture (14; 14A; 14B; 14C; 114) with the first tooling fixture (16; 116) causes a plurality of pins (18; 18A; 18B; 18C; 118) projecting from the second tooling fixture (14; 14A; 14B; 14C; 114) to extend through a thickness of the preform (12; 112).

13. The method of claim 12, wherein engaging the second tooling fixture (14; 14A; 14B; 14C; 114) with the first tooling fixture (16; 116) further causes the plurality of pins (18; 18A; 18B; 18C; 118) to extend at least partially into respective ones of the plurality of receiving holes (24; 124); and/or wherein the compressive force comprises one or a combination of mechanical pressure and vacuum pressure.

14. The method of claim 12 or 13, wherein debulking further comprises: after applying the compressive force to the preform (12; 112), removing the second tooling fixture (14; 14A; 14B; 14C; 114) such that a plurality of z-channels is formed through the thickness of the preform (12; 112), optionally wherein the method further comprises: densifying the preform (12; 112) using one or a combination of chemical vapor infiltration, chemical vapor deposition, polymer infiltration and pyrolysis, and melt infiltration.

15. The method of any of claims 12 to 14, wherein the preform (12; 112) is formed from silicon carbide; and/or wherein the first tooling fixture (116), the second tooling fixture (114), and the preform (112) are curved.
